# FASCICULE DE BREVET EUROPEEN

(11) **EP 1 573 690 B1**
(45) Date de publication et mention de la délivrance du brevet: **13.08.2008**
(21) Numéro de dépôt: 03813177.7
(22) Date de dépôt: 12.12.2003
(51) Int. Cl.: G07F 7/10

(54) **PROCEDE SECURISE DE MODIFICATION DE DONNEES ENREGISTREES DANS UNE CARTE A MEMOIRE**
SICHERES VERFAHREN ZUM MODIFIZIEREN VON INEINER SPEICHERKARTE AUFGEZEICHNETEN DATEN
SECURE METHOD FOR MODIFYING DATA RECORDED IN A MEMORY CARD

(30) Priorité: 12.12.2002 FR 0215740
(43) Date de publication de la demande: 14.09.2005
(73) Titulaire: ASK S.A., 06560 Valbonne (FR)
(72) Inventeur: PANGAUD, Nicolas, F-06560 Valbonne (FR)
(86) Numéro de dépôt international: PCT/FR2003/003696
(87) Numéro de publication internationale: WO 2004/055741

(56) Documents cités:
- FR-A- 2 798 205
- US-A- 5 987 563
- US-A1- 2002 065 978
- US-B1- 6 236 591

## Description

### Domaine technique

La présente invention concerne les systèmes dans lesquels une partie des enregistrements de données mémorisés dans une carte à mémoire est modifiée lors d'une transaction effectuée avec un lecteur de la carte et concerne plus particulièrement un procédé sécurisé de modification de données enregistrées dans une carte à mémoire lors d'une transaction avec un lecteur.

### Etat de la technique

Les cartes à mémoire encore appelées cartes à puce sont de plus en plus utilisées comme support de données associées aux titulaires des cartes. Parmi ces cartes, les cartes sans contact pour lesquelles l'échange d'informations se fait par couplage électromagnétique sans contact entre une antenne logée dans la carte et un lecteur associé ont été développées comme cartes d'accès à des zones d'accès contrôlé, ou comme porte-monnaie électroniques.

D'une manière générale, les cartes à mémoire utilisent des mémoires non volatiles, effaçables et réinscriptibles du type EEPROM ou flash EPROM, de sorte que les données restent inscrites dans la mémoire même lorsque cette dernière est hors tension. Elles permettent en outre une mise à jour des données enregistrées par effacement d'un ou plusieurs emplacements de mémoire et écriture de nouvelles données.

I1 peut arriver que, lors d'une transaction, la mémoire soit corrompue en raison d'une interruption accidentelle de l'alimentation électrique due généralement à un "arrachement" de la carte, c'est à dire un retrait de celle-ci avant la fin du traitement, qui entraîne la perte des données antérieures sans enregistrement de nouvelles données. Ce risque est particulièrement élevé avec les cartes du type sans contact où les limites de l'espace dans lequel la carte peut fonctionner correctement ne sont pas perceptibles.

Un risque supplémentaire se présente dans le cas des mémoires non volatiles de type EEPROM avec lesquelles, si l'on interrompt une opération d'écriture avant sa fin normale, il peut se faire que les données soient néanmoins écrites, et puissent donc être correctement lues peu après l'écriture. Toutefois, si l'on réitère cette lecture plus tard, il n'est pas certain que l'on puisse l'effectuer correctement, car la rétention de l'information dans la cellule mémoire aura été insuffisante du fait de l'écriture interrompue avant terme.

Pour assurer l'intégrité des données, il est donc souhaitable que les cartes soient protégées à l'encontre de tels risques, en garantissant que les données sont soit dans l'état modifié, soit dans l'état avant demande de modification, mais jamais dans un état intermédiaire indéterminé résultant d'un "arrachement".

Pour des raisons de sécurité de la transaction, il est indispensable de recommencer toute la transaction si une coupure d'alimentation vient à se produire durant le cours de la transaction, sous peine de perdre irrémédiablement des données sensibles (par exemple le solde créditeur d'un porte-monnaie électronique) s'il n'est pas possible de repartir du début de la transaction.

De manière à apporter une réponse au problème énoncé ci-dessus on a songé à mémoriser l'enregistrement de données dans une mémoire tampon avant de procéder à sa modification. Lorsque toutes les modifications ont été apportées aux enregistrements à modifier, les anciens enregistrements sont effacés de la mémoire tampon.
Malheureusement, cette méthode nécessite pour chaque enregistrement une opération de sauvegarde dans la zone tampon, une opération d'effacement de l'enregistrement à modifier, une opération de ré-écriture et une opération d'effacement de l'enregistrement ancien dans la zone tampon, soit 4 opérations au total. Cette opération a donc l'inconvénient de prendre beaucoup de temps ce qui représente un inconvénient majeur avec les cartes sans contact.

En outre, la sauvegarde des données dans un autre emplacement de la mémoire avant d'effacer les données antérieures nécessite la présence d'un "drapeau" (flag) destiné à indiquer que l'opération de modification s'est effectuée correctement ou non selon la valeur du drapeau. Le drapeau peut être un seul bit qui prend la valeur 0 ou 1 selon que la modification s'est déroulée correctement ou non. Dans la mesure où il n'est pas concevable pour des raisons évidentes d'enregistrer des bits de contrôle au même emplacement que les données, la seule solution consiste à enregistrer le drapeau (le ou les bits de contrôle) dans un emplacement de mémoire réservé à cet effet et donc un bloc entier de 16 ou 32 bits alors qu'un seul bit ou quelques bits suffisent.

Ainsi le document US-B1-6.236.591 décrit une méthode pour modifier une valeur de données dans une mémoire non volatile qui peut être soit toujours incrémentée soit toujours décrémentée comme dans l'invention examinée. Mais chaque secteur de mémoire où est écrite la valeur de données est associé à une cellule de la mémoire non volatile dont l'état définit la zone de mémoire valide où est enregistrée la valeur de données.

Les inconvénients cités ci-dessus prennent encore plus d'importance lorsque la carte à mémoire est utilisée dans certaines applications ne nécessitant qu'une mémoire de faible capacité où il devient impératif de ne pas gaspiller des positions de la mémoire et dans lesquelles la valeur des données modifiées à chaque transaction est une fonction monotone dans le temps. Dans de telles applications, l'enregistrement de données en mémoire est soit un compteur croissant qui s'incrémente dans le temps comme par exemple une machine à photocopier, soit un compteur décroissant dans le cas d'une carte pour transport en commun où la valeur de l'enregistrement est décrémentée d'une unité à chaque voyage, soit un porte-monnaie électronique où la valeur de l'enregistrement ne peut aller qu'en décroissant.

### Exposé de l'invention

C'est pourquoi le but de l'invention est de réaliser un procédé de modification de données dans une carte à mémoire lors d'une transaction qui s'effectue dans un minimum de temps compatible avec le temps d'accès limité à la carte durant la transaction.

Un autre but de l'invention est de réaliser un procédé de modification de données dans une carte à mémoire du type carte sans contact qui ne nécessite pas la réservation de bits de contrôle (drapeau) dans un emplacement de la mémoire.

L'objet de l'invention est donc un procédé de modification des données dans un système de transaction par carte comprenant une carte à mémoire ou équivalent et un lecteur apte à lire cette carte lorsque celle-ci se trouve dans une position déterminée par rapport au lecteur, la carte comprenant une mémoire non volatile, effaçable et ré-inscriptible comportant au moins un emplacement pour enregistrer une valeur de données en relation avec les transactions effectuées, chaque transaction entraînant l'incrémentation de la valeur de données. A chaque transaction, une opération d'écriture de la valeur de données effectue l'écriture de la nouvelle valeur de données dans un premier emplacement qui contient la valeur zéro parmi deux emplacements prédéfinis formant un compteur dans la mémoire, l'opération d'écriture effectuant l'effacement de l'ancienne valeur de données enregistrée dans le deuxième emplacement de sorte qu'à la fin de l'opération d'écriture, le premier emplacement contient la nouvelle valeur de données alors que le deuxième emplacement contient la valeur zéro si cette opération d'écriture s'est effectuée correctement, ou aucun des deux emplacements du compteur ne contient la valeur zéro si l'opération d'écriture ne s'est pas effectuée correctement à cause d'un arrachement de la carte au cours de la transaction.

### Description brève des figures

Les buts, objets et caractéristiques de l'invention apparaîtront plus clairement à la lecture de la description qui suit faite en référence aux dessins dans lesquels :
- La figure 1 est une représentation schématique de la mémoire d'une carte à mémoire dans laquelle est mis en oeuvre le procédé selon l'invention,
- La figure 2 est une représentation schématique du contenu du compteur à deux étages de la mémoire pour chaque phase de l'opération d'écriture,
- La figure 3 est une représentation schématique du compteur à deux étages de la carte à mémoire pour chaque phase de l'opération de ré-écriture dans une première situation après arrachement,
- La figure 4 est une représentation schématique du compteur à deux étages de la carte à mémoire pour chaque phase de l'opération de ré-écriture dans une deuxième situation après arrachement,
- La figure 5 est une représentation schématique du compteur à deux étages de la carte à mémoire pour chaque phase de l'opération de ré-écriture dans une troisième situation après arrachement,
- La figure 6 est une représentation schématique du compteur à deux étages de la carte à mémoire pour chaque phase de l'opération de ré-écriture dans une quatrième situation après arrachement, et
- La figure 7 est une représentation schématique du compteur à deux étages de la carte à mémoire pour chaque phase de l'opération de ré-écriture dans une cinquième situation après arrachement.

### Description détaillée de l'invention

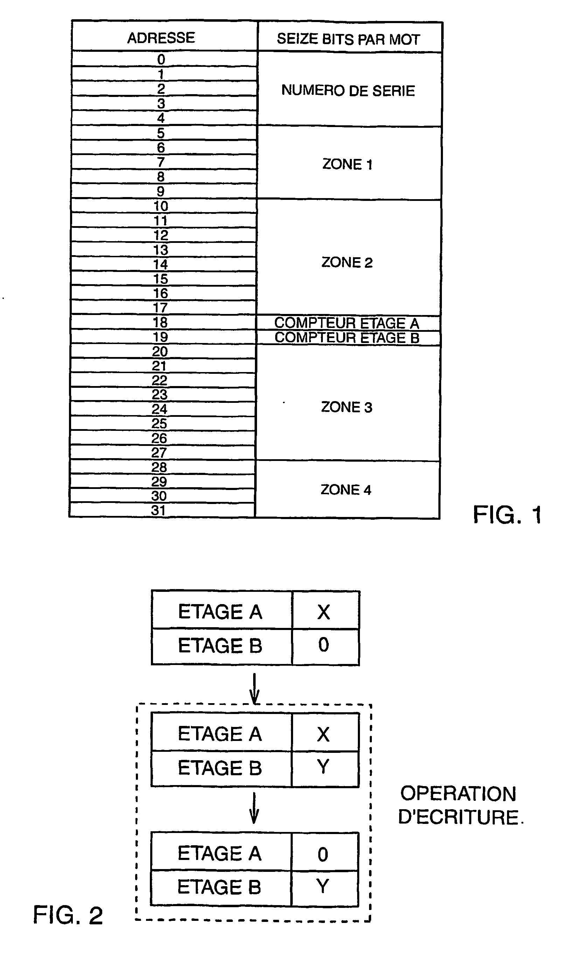

Dans une carte à puce du type mémoire à logique câblée utilisée dans les applications nécessitant peu de mémoire, les emplacements de mémoire sont comptés. Ainsi, la mémoire d'une telle carte à puce illustrée sur la figure 1 est une mémoire du type EEPROM ayant une capacité de 32 mots de 16 bits. L'invention décrite ci-dessous permet d'éviter de disposer dans la mémoire d'une zone de contrôle obligeant à réserver un mot entier. Pour cela, deux emplacements de mémoire formant un compteur à deux étages (étage A, étage B) sont réservés à l'enregistrement de la nouvelle valeur de données à chaque transaction effectuée entre le lecteur et la carte à mémoire.

Les principes de l'invention sont mis à profit dans toutes les applications où la valeur de données modifiée à chaque transaction est une fonction monotone dans le temps. Dans certains cas (par exemple carte utilisée pour effectuer des photocopies), la valeur enregistrée est incrémentée alors que dans d'autres applications telles que l'accès à des zones d'accès contrôlé ou le porte-monnaie électronique, la valeur de données va en décroissant. Cependant, il est préférable d'utiliser une incrémentation plutôt qu'une décrémentation du compteur. En effet, lorsqu'il y a arrachement, le risque est qu'il n'y ait pas une rétention correcte des bites qui ont été écrits en mémoire. Dans ce cas, la valeur enregistrée peut diminuer parce que chaque bit 1 peut retomber à 0. Si on utilise une décrémentation, la valeur mal écrite allant en décroissant, sa décroissance fait courir un risque au titulaire de la carte dans la mesure où il n'est pas possible de savoir si la valeur en mémoire résulte d'une décrémentation normale ou d'une décroissance anormale du contenu de la mémoire. Au contraire, lorsqu'on utilise l'incrémentation, la décroissance de la mémoire ne présente pas de risque dans la mesure où la valeur à prendre en considération est la valeur précédente avant incrémentation lorsqu'il y a décroissance de la valeur mal enregistrée suite à un arrachement.

Dans le cas d'une décrémentation, il est aisé de considérer à chaque fois le complément à deux en binaire de la valeur de données. Ainsi, dans ce qui suit, la valeur de données est incrémentée à chaque transaction quelle que soit l'application considérée.

Le procédé selon l'invention consiste à enregistrer la nouvelle valeur de données qui a fait l'objet de la modification dans l'étage du compteur qui contenait la valeur 0 et à effacer l'autre étage du compteur pour mettre sa valeur à 0. Ces deux phases qui ne peuvent pas être inversées, sont déclenchées par une instruction d'écriture de la nouvelle valeur provenant du lecteur au moment de la transaction.

La figure 2 illustre le déroulement normal des opérations. Au départ, la lecture du compteur fait apparaître la valeur X dans l'étage A et la valeur 0 dans l'étage B. L'instruction d'écriture effectue ensuite l'écriture de la nouvelle valeur Y dans l'étage B, puis l'effacement de la valeur X de l'étage A. Donc, le compteur est incrémenté en une seule instruction.

Malheureusement, un arrachement de la carte peut se produire durant la transaction, en particulier lorsque la carte à puce est une carte sans contact. Dans ce cas l'opération d'écriture ne se déroule pas correctement et soit l'écriture de la nouvelle valeur ne s'est pas faite correctement, soit l'ancienne valeur n'a pas été effacée. Dans ce cas, la transaction n'aboutit pas ou n'est pas validée. Ceci peut avoir comme résultat de ne pas autoriser l'ouverture d'un portillon d'accès à une zone à accès contrôlée ou de ne pas permettre un achat par un terminal de commerçant dans le cas d'un porte-monnaie électronique.

Le titulaire de la carte recommence alors l'opération consistant à faire passer sa carte dans ou devant un lecteur. Celui-ci effectue en premier la lecture du compteur qui fait apparaître qu'aucun des deux étages du compteur n'est à la valeur O. Il en déduit immédiatement qu'il y a eu arrachement et procède alors à la réparation du.compteur comme décrit ci-dessous.

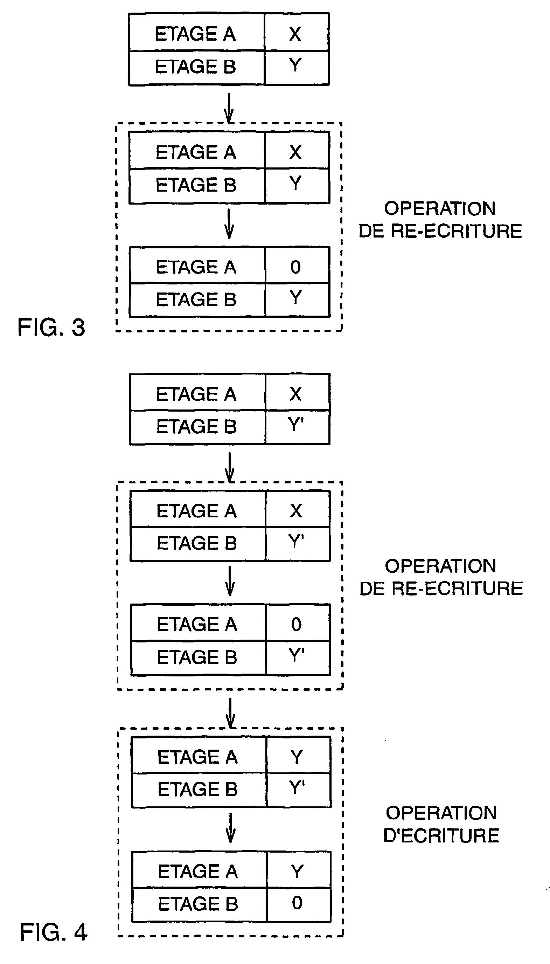

Les figures 3 à 7 illustrent les opérations de réparation du compteur lorsqu'il y a eu arrachement selon que cet arrachement s'est produit pendant la phase d'écriture, entre la phase d'écriture et la phase d'effacement ou pendant la phase d'effacement.

Dans une première situation illustrée par la figure 3, l'arrachement a eu lieu pendant la phase d'écriture, la valeur Y a été écrite mais la valeur X n'a pas été effacée. Dans ce cas, et bien que la valeur Y soit correcte, il n'est pas possible de garantir la rétention de cette valeur dans l'étage B. La valeur Y est donc ré-écrite avant de procéder à l'effacement de la valeur X de l'étage A pour la mettre à 0. A noter que l'écriture d'un emplacement de mémoire est une fonction OU entre la valeur qui s'y trouve et la nouvelle valeur et que par conséquent, on ne peut qu'écrire une nouvelle valeur que si l'ancienne valeur est égale à 0 ou à identiquement la nouvelle valeur (ce qui est le cas ici).

Dans une deuxième situation illustrée sur la figure 4, l'arrachement a eu lieu pendant la phase d'écriture, une valeur Y' comprise entre X et Y a été écrite dans l'étage B et la valeur X n'a pas été effacée de l'étage A. Dans ce cas, une première opération d'écriture procède à la ré-écriture de Y' dans l'étage B et à l'effacement de X de l'étage A. Puis une opération d'écriture procède à l'écriture de Y dans l'étage A et à l'effacement de Y' de l'étage B, de sorte que le compteur se retrouve dans une situation normale où un étage contient la nouvelle valeur et où l'autre étage est à 0.

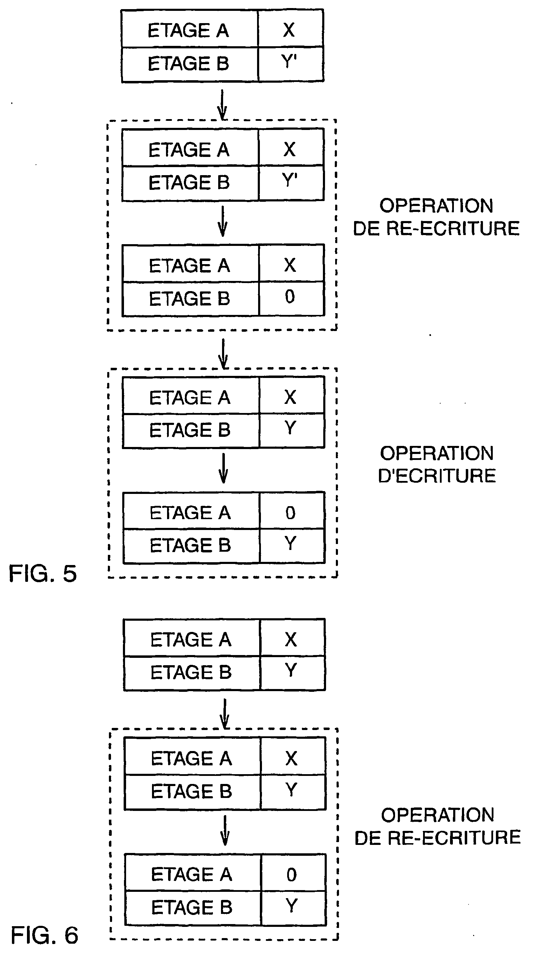

Dans une troisième situation illustrée sur la figure 5, l'arrachement a eu lieu pendant la phase d'écriture, une valeur Y' inférieure à X a été écrite dans l'étage B et la valeur X n'a pas été effacée. Dans ce cas, une première opération de ré-écriture procède à la ré-écriture de la valeur X dans l'étage A et à l'effacement de Y' de l'étage B. Ceci se justifie par le fait que la réparation du compteur s'effectue toujours avec la valeur la plus grande qui est, en l'occurrence, la valeur X. Puis une opération d'écriture procède à l'écriture de la valeur Y dans l'étage B et à l'effacement de X de l'étage A.

Dans une quatrième situation illustrée sur la figure 6, l'arrachement a eu lieu entre la phase d'écriture et la phase d'effacement, la valeur Y a été enregistrée dans l'étage B mais la valeur X n'a pas été effacée de l'étage A. Comme on ne peut pas garantir la rétention de la valeur Y, une opération de ré-écriture procède à la ré-écriture de la valeur Y dans l'étage B et à l'effacement de la valeur X de l'étage A.

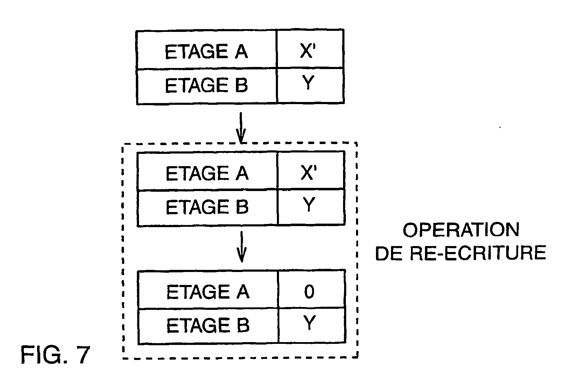

Dans une cinquième situation illustrée sur la figure 7, l'arrachement a eu lieu pendant la phase d'effacement, la valeur Y a été écrite dans l'étage B mais la valeur X n'a pas été effacée correctement et une valeur X' se trouve dans l'étage A. Il faut donc procéder à une opération de ré-écriture de la valeur Y dans l'étage B qui permet alors l'effacement de la valeur X' de l'étage A.

Dans toutes les situations qui viennent d'être décrites, la réparation du compteur a été entreprise parce qu'aucun des deux étages ne contenait la valeur 0, et après réparation, l'un des deux étages contient la nouvelle valeur de données alors que l'autre étage contient 0. A noter que, dans aucune des situations, le compteur se retrouve dans un état où la valeur maximale se trouvant dans l'étage A ou dans l'étage B est inférieure à l'ancienne valeur (X).

## Revendications

1. Procédé de modification des données dans un système de transaction par carte comprenant une carte à mémoire ou équivalent et un lecteur apte à lire ladite carte lorsque celle-ci se trouve dans une position déterminée par rapport audit lecteur, ladite carte comprenant une mémoire non volatile, effaçable et ré-inscriptible comportant au moins un emplacement pour enregistrer une valeur de données en relation avec les transactions effectuées par ladite carte, chaque transaction entraînant l'incrémentation de ladite valeur de données ;
ledit procédé étant **caractérisé en ce que**, à chaque transaction, une opération d'écriture de ladite valeur de données effectue l'écriture de la nouvelle valeur de données (Y) dans un premier emplacement (B) qui contient la valeur zéro parmi deux emplacements prédéfinis formant un compteur dans ladite mémoire, ladite opération d'écriture effectuant l'effacement de l'ancienne valeur de données (X) enregistrée dans le deuxième emplacement (A) desdits deux emplacements de sorte qu'à la fin de l'opération d'écriture, ledit' premier emplacement contient ladite nouvelle valeur de données alors que ledit deuxième emplacement contient la valeur zéro si cette opération d'écriture s'est effectuée correctement, ou aucun des deux emplacements dudit compteur ne contient la valeur zéro si ladite opération d'écriture ne s'est pas effectuée correctement à cause d'un arrachement de ladite carte au cours de la transaction.

2. Procédé selon la revendication 1, comprenant en outre une réparation dudit compteur par une opération de ré-écriture consistant à ré-écrire ladite nouvelle valeur (Y) dans ledit premier emplacement (B) et à effacer ladite ancienne valeur (X) dudit deuxième emplacement (A) lorsque l'arrachement a eu lieu pendant la phase d'écriture de ladite nouvelle valeur.

3. Procédé selon la revendication 1, comprenant en outre, lorsque ledit premier emplacement (B) contient une valeur incorrecte (Y') comprise entre ladite ancienne valeur de donnée (X) et ladite nouvelle valeur de données (Y), une réparation dudit compteur par une opération de ré-écriture consistant à ré-écrire ladite valeur incorrecte dans ledit premier emplacement et à effacer ladite ancienne valeur dudit deuxième emplacement, suivie d'une opération d'écriture consistant à écrire ladite nouvelle valeur dans ledit deuxième emplacement (A) et à effacer ladite valeur incorrecte dudit premier emplacement.

4. Procédé selon la revendication 1, comprenant en outre, lorsque ledit premier emplacement (B) contient une valeur de données incorrecte (Y') inférieure à ladite ancienne valeur (X), une réparation dudit compteur par une opération de ré-écriture consistant à ré-écrire ladite ancienne valeur de données (X) dans ledit deuxième emplacement (A) et à effacer ladite valeur de données incorrecte, suivie d'une opération d'écriture, consistant à écrire ladite nouvelle valeur de données (y) dans ledit premier emplacement et à effacer ladite ancienne valeur de données dudit deuxième emplacement.

5. Procédé selon la revendication 1, comprenant en outre une réparation dudit compteur par une opération de ré-écriture consistant à ré-écrire ladite nouvelle valeur de données (Y) dans ledit premier emplacement (B) et à effacer ladite ancienne valeur de données (X) dudit deuxième emplacement (A) lorsque l'arrachement a eu lieu entre la phase d'écriture de ladite nouvelle valeur de données et la phase d'effacement de ladite ancienne valeur de données.

6. Procédé selon la revendication 1, comprenant en outre, lorsque l'arrachement a eu lieu pendant la phase d'effacement de ladite ancienne valeur de données (X) et qu'une valeur de données incorrecte (X') est enregistrée dans ledit deuxième emplacement (A), une réparation dudit compteur par une opération de ré-écriture consistant à ré-écrire ladite nouvelle valeur de données (Y) dans ledit premier emplacement (B) et à effacer ladite valeur de données incorrecte dudit deuxième emplacement.

7. Système de transaction par carte comprenant une carte à mémoire ou équivalent et un lecteur apte à lire ladite carte lorsque celle-ci se trouve dans une position déterminée par rapport audit lecteur, ladite carte incluant une mémoire non volatile, effaçable et ré-inscriptible comportant au moins un emplacement pour enregistrer une valeur de données en relation avec les transactions effectuées par ladite carte, chaque transaction entraînant l'incrémentation de ladite valeur de données;
ledit système étant **caractérisé en ce que** ladite mémoire comprend un premier emplacement et un deuxième emplacement prédéfinis formant un compteur, chaque transaction donnant lieu à une instruction d'écriture effectuant l'écriture d'une nouvelle valeur de données (Y) dans celui desdits emplacements (B) qui contient la valeur zéro et l'effacement de l'ancienne valeur de données (X) dans l'autre emplacement (A), de sorte qu'à la fin de l'opération d'écriture, ledit premier emplacement contient ladite nouvelle valeur de données alors que ledit deuxième emplacement contient la valeur zéro si cette opération d'écriture s'est effectuée correctement, ou aucun des deux emplacements dudit compteur ne contient la valeur zéro si ladite opération d'écriture ne s'est pas effectuée correctement à cause d'un arrachement de ladite carte au cours de la transaction.

8. Système selon la revendication 7, dans lequel ladite carte à mémoire est une carte sans contact.

## Claims

1. A method for modifying the data in a card transaction system including a smart card or the like and a reader capable of reading said card when it is in a determined position in relation to said reader, said card including a non-volatile, erasable and rewritable memory comprising at least one location to record a data value relating to the transactions carried out by said card, each transaction causing the incrementation of said data value;
said method being **characterised in that**, at each transaction, an operation for writing said data value performs the writing of the new data value (Y) in a first location (B) which contains the value zero among two predefined locations forming a counter in said memory, said writing operation performing the erasing of the old data value (X) recorded in the second location (A) of said two locations such that, at the end of the writing operation, said first location contains said new data value whilst said second location contains the value zero if this writing operation was performed correctly, or none of the two locations in said counter contains the value zero if said writing operation has not been performed correctly as a result of an abrupt withdrawal of said card in the course of the transaction.

2. The method according to Claim 1, further including a repair of said counter by a rewriting operation consisting in rewriting said new value (Y) in said first location (B) and erasing said old value (X) from said second location (A) when the abrupt withdrawal has taken place during the writing phase of said new value.

3. The method according to Claim 1, further including, when said first location (B) contains an incorrect value (Y') between said old data value (X) and said new data value (Y), a repair of said counter by a rewriting operation consisting in rewriting said incorrect value in said first location and erasing said old value from said second location, followed by a writing operation consisting in writing said new value in said second location (A) and erasing said incorrect value from said first location.

4. The method according to Claim 1, further including, when said first location (B) contains an incorrect data value (Y') which is less than said old value (X), a repair of said counter by a rewriting operation consisting in rewriting said old data value (X) in said second location (A) and erasing said incorrect data value, followed by a writing operation, consisting in writing said new data value (y) in said first location and erasing said old data value from said second location.

5. The method according to Claim 1, further including a repair of said counter by a rewriting operation consisting in rewriting said new data value (Y) in said first location (B) and erasing said old data value (X) from said second location (A) when the abrupt withdrawal has taken place between the writing phase of said new data value and the erasing phase of said old data value.

6. The method according to Claim 1, further including, when the abrupt withdrawal has taken place during the erasing phase of said old data value (X) and an incorrect data value (X') is recorded in said second location (A), a repair of said counter by a rewriting operation consisting in rewriting said new data value (Y) in said first location (B) and erasing said incorrect data value from said second location.

7. A card transaction system including a smart card or the like and a reader capable of reading said card when it is in a determined position in relation to the reader, said card including a non-volatile, erasable and rewritable memory comprising at least one location to record a data value relating to the transactions carried out by said card, each transaction causing the incrementation of said data value;
said system being **characterised in that** said memory includes a predefined first location and a predefined second location, forming a counter, each transaction resulting in a writing instruction performing the writing of a new data value (Y) **in that** location from said locations (B) which contains the value zero and the erasing of the old data value (X) in the other location (A), such that, at the end of the writing operation, said first location contains said new data value whilst said second location contains the value zero if this writing operation was performed correctly, or none of the two locations in said counter contains the value zero if said writing operation has not been performed correctly as a result of an abrupt withdrawal of said card in the course of the transaction.

8. The system according to Claim 7, wherein said smart card is a contactless card.

## Patentansprüche

1. Verfahren zur Änderung der Daten in einem Kartentransaktionssystem, das eine Speicherkarte oder Gleichwertiges und ein Lesegerät aufweist, das die Karte lesen kann, wenn diese sich in einer bestimmten Stellung bezüglich des Lesegeräts befindet, wobei die Karte einen nicht-flüchtigen, löschbaren und wiederbeschreibbaren Speicher aufweist, der mindestens einen Speicherplatz umfasst, um einen Datenwert in Zusammenhang mit den von der Karte durchgeführten Transaktionen zu speichern, wobei jede Transaktion zur Inkrementierung des Datenwerts führt;
wobei das Verfahren **dadurch gekennzeichnet ist, dass** bei jeder Transaktion ein Schreibvorgang des Datenwerts das Schreiben des neuen Datenwerts (Y) an einem ersten Speicherplatz (B), der den Wert Null enthält, von zwei vordefinierten Speicherplätzen durchführt, die einen Zähler in dem Speicher bilden, wobei der Schreibvorgang das Löschen des am zweiten Speicherplatz (A) der zwei Speicherplätze gespeicherten alten Datenwerts (X) durchführt, so dass am Ende des Schreibvorgangs der erste Speicherplatz den neuen Datenwert enthält, während der zweite Speicherplatz den Wert Null enthält, wenn dieser Schreibvorgang korrekt durchgeführt wurde, oder keiner der zwei Speicherplätze des Zählers den Wert Null enthält, wenn der Schreibvorgang aufgrund eines Herausreißens der Karte während der Transaktion nicht korrekt durchgeführt wurde.

2. Verfahren nach Anspruch 1, das außerdem eine Instandsetzung des Zählers durch einen Vorgang des Neuschreibens aufweist, der darin besteht, den neuen Wert (Y) am ersten Speicherplatz (B) neu zu schreiben und den alten Wert (X) des zweiten Speicherplatzes (A) zu löschen, wenn das Herausreißen während der Schreibphase des neuen Werts stattgefunden hat.

3. Verfahren nach Anspruch 1, das außerdem, wenn der erste Speicherplatz (B) einen unrichtigen Wert (Y') enthält, der zwischen dem alten Datenwert (X) und dem neuen Datenwert (Y) liegt, eine Instandsetzung des Zählers durch einen Vorgang des Neuschreibens aufweist, der darin besteht, den unrichtigen Wert am ersten Speicherplatz neu zu schreiben und den alten Wert des zweiten Speicherplatzes zu löschen, gefolgt von einem Schreibvorgang, der darin besteht, den neuen Wert am zweiten Speicherplatz (A) zu schreiben und den unrichtigen Wert des ersten Speicherplatzes zu löschen.

4. Verfahren nach Anspruch 1, das außerdem, wenn der erste Speicherplatz (B) einen unrichtigen Datenwert (Y') unter dem alten Wert (X) enthält, eine Instandsetzung des Zählers durch einen Vorgang des Neuschreibens aufweist, der darin besteht, den alten Datenwert (X) am zweiten Speicherplatz (A) neu zu schreiben und den unrichtigen Datenwert zu löschen, gefolgt von einem Schreibvorgang, der darin besteht, den neuen Datenwert (Y) am ersten Speicherplatz zu schreiben und den altem Datenwert des zweiten Speicherplatzes zu löschen.

5. Verfahren nach Anspruch 1, das außerdem eine Instandsetzung des Zählers durch einen Vorgang des Neuschreibens aufweist, der darin besteht, den neuen Datenwert (Y) am ersten Speicherplatz (B) neu zu schreiben und den alten Datenwert (X) des zweiten Speicherplatzes (A) zu löschen, wenn das Herausreißen zwischen der Schreibphase des neuen Datenwerts und der Löschphase des alten Datenwerts stattgefunden hat.

6. Verfahren nach Anspruch 1, das außerdem, wenn das Herausreißen während der Löschphase des alten Datenwerts (X) stattgefunden hat und ein unrichtiger Datenwert (X') am zweiten Speicherplatz (A) gespeichert ist, eine Instandsetzung des Zählers durch einen Vorgang des Neuschreibens aufweist, der darin besteht, den neuen Datenwert (Y) am ersten Speicherplatz (B) neu zu schreiben und den unrichtigen Datenwert am zweiten Speicherplatz zu löschen.

7. Kartentransaktionssystem, das eine Speicherkarte oder Gleichwertiges und ein Lesegerät aufweist, das die Karte lesen kann, wenn diese sich in einer bestimmten Stellung bezüglich des Lesegeräts befindet, wobei die Karte einen nicht-flüchtigen, löschbaren und wiederbeschreibbaren Speicher aufweist, der mindestens einen Speicherplatz besitzt, um einen Datenwert in Zusammenhang mit den von der Karte durchgeführten Transaktionen zu speichern, wobei jede Transaktion zur Inkrementierung des Datenwerts führt;
wobei das System **dadurch gekennzeichnet ist, dass** der Speicher einen ersten und einen zweiten vordefinierten Speicherplatz besitzt, die einen Zähler bilden, wobei jede Transaktion zu einem Schreibbefehl führt, der das Schreiben eines neuen Datenwerts (Y) an demjenigen der Speicherplätze (B), der den Wert Null enthält, und das Löschen des alten Datenwerts (X) am anderen Speicherplatz (A) durchführt, so dass am Ende des Schreibvorgangs der erste Speicherplatz den neuen Datenwert enthält, während der zweite Speicherplatz den Wert Null enthält, wenn dieser Schreibvorgang korrekt durchgeführt wurde, oder keiner der zwei Speicherplätze des Zählers den Wert Null enthält, wenn der Schreibvorgang aufgrund eines Herausreißens der Karte während der Transaktion nicht korrekt durchgeführt wurde.

8. System nach Anspruch 7, bei dem die Speicherkarte eine kontaktlose Karte ist.
